# EUROPEAN PATENT APPLICATION

(11) **EP 4 435 123 A1**
(43) Date of publication of application: **25.09.2024**
(21) Application number: 24160752.2
(22) Date of filing: 01.03.2024
(51) Int. Cl.: C22C 19/00, H01M 4/24, H01M 4/38, H01M 10/34

(54) **NICKEL-METAL HYDRIDE BATTERY**

(30) Priority: 22.03.2023 JP 2023045675
(71) Applicant: TOYOTA JIDOSHA KABUSHIKI KAISHA, Toyota-shi, Aichi-ken, 471-8571 (JP)
(72) Inventor: KON, Makio, Toyota-shi, 471-8571 (JP); SAWADA, Naotaka, Toyota-shi, 471-8571 (JP); KAIYA, Hiroyuki, Toyota-shi, 471-8571 (JP); OUCHI, Masanobu, Toyota-shi, 471-8571 (JP); MATSUNAGA, Tomoya, Toyota-shi, 471-8571 (JP); SUYAMA, Hiroshi, Toyota-shi, 471-8571 (JP); SATO, Shigeki, Toyota-shi, 471-8571 (JP)
(74) Representative: D Young & Co LLP

(57) **Abstract**

A nickel-metal hydride battery of the present disclosure comprises:
a positive electrode active material layer, a negative electrode active material layer, and an aqueous electrolyte, wherein
a negative electrode active material contained in the negative electrode active material layer is a hydrogen storage alloy having an AB₂ main phase,
the A site includes Ti, Zr, or a combination thereof, and
the B site includes Mn, Cr, Ni, Fe, or a combination thereof.

## Description

### FIELD

The present invention relates to a nickel-metal hydride battery.

### BACKGROUND

In recent years, hydrogen storage alloys have attracted attention as negative electrodes for alkaline storage batteries, and hydrogen storage alloys are being developed as electrode materials having large discharge capacity. The properties and performance of these hydrogen storage alloys for electrodes are highly dependent on the composition, crystal structure, and production method thereof, and thus, these points are being studied from multiple angles when developing new alloys.

Though various ideas and improvements have been proposed, conventionally, the constituent elements of various hydrogen storage alloys are melted at a high temperature, and after cooling, the alloy mass is crushed and molded, or the powder is mixed with a conductive agent and a resin binder and bonded to a current collector, and used as an active material. However, though many of the conventional hydrogen storage alloys are active materials and have a large discharge capacity, most of them have poor cycle life characteristics when applied to nickel-metal hydride secondary batteries.

To improve these shortcomings, regarding the constituent composition or crystal structure of the alloy, an alloy in which the alloy phase has a Laves phase of an intermetallic compound and the crystal structure is the cubic C15 type or the C14 type has been proposed. Specifically, Patent Literature 1 proposes a hydrogen storage alloy in which the crystal structure of the intermetallic compound as an alloy phase is the cubic C15 type or the hexagonal C14 type belonging to the Laves phase, and its constituent elements Zr, Ti, Nb, V, Ni, Mn, Cr, Co, Fe, Si, Mo, and B are expressed in the following atomic ratio ranges.

Patent Literature 2 proposes a hydrogen storage alloy having excellent friability and having a composition represented by Zr₁₋ₐMmₐNi_{b}V_{c}Mn_{d}Mₑ, and a negative electrode for a nickel-metal hydride secondary battery using this hydrogen storage alloy as an active material. In the formula, M is one or more elements selected from the group consisting of Cr, Fe, Mo and Nb, 0.03 ≤ a < 0.5, 1.0 ≤ b ≤ 1.50, 0.1 ≤ c ≤ 0.5, 0.2 ≤ d ≤ 0.7, 0.05 ≤ e ≤ 0.30, and 1.8 ≤ b + c + d + e ≤ 2.3.

### [CITATION LIST]

### [PATENT LITERATURE]

[PTL 1] Japanese Unexamined Patent Publication (Kokai) No. 10-36930
[PTL 2] Japanese Unexamined Patent Publication (Kokai) No. 8-73970

### SUMMARY

### [TECHNICAL PROBLEM]

The present disclosure provides a novel nickel-metal hydride battery which has improved capacity retention.

### [SOLUTION TO PROBLEM]

As a result of rigorous investigation, the present disclosers have discovered that the above object can be achieved by the following means, and have completed the nickel-metal hydride battery of the present disclosure. Specifically, the present disclosure is as follows:
<Aspect 1> A nickel-metal hydride battery, comprising:
   a positive electrode active material layer, a negative electrode active material layer, and an aqueous electrolyte, wherein
   a negative electrode active material contained in the negative electrode active material layer is a hydrogen storage alloy having an AB₂ main phase,
   the A site includes Ti, Zr, or a combination thereof,
   the B site includes Mn, Cr, Ni, Fe, or a combination thereof, and
   among all metal atoms in the hydrogen storage alloy, a proportion of Mn is 15 at% or less, a proportion of Cr is 10 at% to 80 at%, and a proportion of Ni is 10 at% to 80 at%, and a proportion of Fe is 50 at% or less.
<Aspect 2> The nickel-metal hydride battery according to Aspect 1, wherein an atomic ratio of Mn relative to Cr at the B site of the negative electrode active material is 0.8 or less.
<Aspect 3> A nickel-metal hydride battery, comprising:
   a positive electrode active material layer, a negative electrode active material layer, and an aqueous electrolyte, wherein
   a negative electrode active material contained in the negative electrode active material layer is a hydrogen storage alloy having an AB₂ main phase,
   the A site includes Ti, Zr, or a combination thereof,
   the B site includes Mn, Cr, Ni, Fe, or a combination thereof, and
   the hydrogen storage alloy contains Al.
<Aspect 4> The nickel-metal hydride battery according to Aspect 3, wherein the hydrogen storage alloy contains Al in a proportion of 10 at% or less relative to all metal atoms of the hydrogen storage alloy.

### [ADVANTAGEOUS EFFECTS OF INVENTION]

According to the present disclosure, a novel nickel-metal hydride battery having improved capacity retention can be provided.

### BRIEF DESCRIPTION OF DRAWINGS

FIG. 1 is a schematic view of a nickel-metal hydride battery of the present disclosure.
FIG. 2A is a graph showing change in discharge capacity of Comparative Example 1 and Examples 1 to 4.
FIG. 2B is a graph showing change in capacity retention of Comparative Example 1 and Examples 1 to 4.
FIG. 3A is a graph showing change in discharge capacity of Comparative Example 1 and Examples 5 to 8.
FIG. 3B is a graph showing change in capacity retention of Comparative Example 1 and Examples 5 to 8.
FIG. 4A is a graph showing change in discharge capacity of Comparative Example 1 and Examples 9 to 12.
FIG. 4B is a graph showing change in capacity retention of Comparative Example 1 and Examples 9 to 12.
FIG. 5A is a graph showing change in discharge capacity of Comparative Example 1 and Examples 13 to 14.
FIG. 5B is a graph showing change in capacity retention of Comparative Example 1 and Examples 13 to 14.
FIG. 6A is a graph showing change in discharge capacity of Comparative Examples 1 to 4.
FIG. 6B is a graph showing change in capacity retention of Comparative Examples 1 to 4.

### DESCRIPTION OF EMBODIMENTS

### «Nickel-Metal Hydride Battery»

A nickel-metal hydride battery of the present disclosure comprises:
a positive electrode active material layer, a negative electrode active material layer, and an aqueous electrolyte, wherein
a negative electrode active material contained in the negative electrode active material layer is a hydrogen storage alloy having an AB₂ main phase,
the A site includes Ti, Zr, or a combination thereof, and
the B site includes Mn, Cr, Ni, Fe, or a combination thereof.

In a first aspect, among all metal atoms in the hydrogen storage alloy, the proportion of Mn is 15 at% or less, the proportion of Cr is 10 at% to 80 at%, and the proportion of Ni is 10 at% to 80 at%, and the proportion of Fe is 50 at% or less.

In the second aspect, the hydrogen storage alloy contains Al. Al may be present at the B site or in a grain boundary phase.

The present disclosers have discovered that Mn, which is an element with a relatively low oxidation potential among metal elements constituting the negative electrode active materials of nickel-metal hydride batteries, elutes from the negative electrode active materials during charge/discharge cycles due to its low elution resistance to electrolytic solutions, which are generally strongly alkaline, resulting in a capacity decrease due to charge/discharge cycles.

Conversely, the present disclosers have discovered that the above two aspects can suppress the elution of Mn, and as a result, the capacity decrease due to charge/discharge cycles can be suppressed.

More specifically, in the first Aspect, by reducing the amount of Mn, the amount of Mn eluted can be reduced, thereby suppressing a reduction in battery capacity.

In the second aspect, the addition of Al increases the alkali resistance of the hydrogen storage alloy, thereby suppressing the elution of Mn.

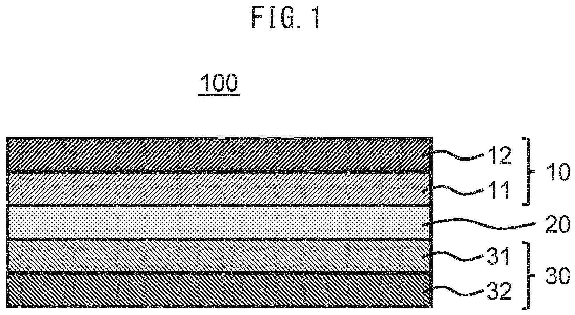

FIG. 1 schematically shows the configuration of a nickel-metal hydride battery 100 according to a first embodiment of the present disclosure. As shown in FIG. 1, the nickel-metal hydride battery 100 may comprise a positive electrode 10, a separator 20, and a negative electrode 30. Further, the positive electrode 10 may comprise a positive electrode active material layer 11 and a positive electrode current collector 12, and the negative electrode 30 may comprise a negative electrode active material layer 31 and a negative electrode current collector 32. In this case, the negative electrode active material layer 31 can include the negative electrode active material described above. Further, though not shown, the above aqueous electrolyte may be included in the positive electrode active material layer 11 and the negative electrode active material layer 31.

Each constituent feature of the present disclosure will be described below.

### <Negative Electrode Current Collector Layer>

The negative electrode current collector layer may be composed of a known metal or the like that can be used as a negative electrode current collector of a nickel-metal hydride battery. Examples of such a metal material include a metal material containing at least one element selected from the group consisting of Cu, Ni, Al, V, Au, Pt, Mg, Fe, Ti, Pb, Co, Cr, Zn, Ge, In, Sn, and Zr. In particular, when considering stability in the aqueous electrolyte, the negative electrode current collector may contain at least one element selected from the group consisting of Al, Ti, Pb, Zn, Sn, Mg, Zr, and In, may contain at least one element selected from the group consisting of Ti, Pb, Zn, Sn, Mg, Zr and In, and may contain Ti. Even if coming into contact with an aqueous electrolyte, Al, Ti, Pb, Zn, Sn, Mg, Zr, and In, each having a low work function, appear unlikely to cause electrolysis of the aqueous electrolyte.

### <Negative Electrode Active Material Layer>

The negative electrode active material layer contains a negative electrode active material. Furthermore, the negative electrode active material layer may contain a conductive aid or a binder in addition to the negative electrode active material. The thickness of the negative electrode active material layer is not particularly limited, and may be, for example, 0.1 µm or more or 1 µm or more, and 1 mm or less or 100 µm or less.

### (Negative Electrode Active Material)

The negative electrode active material contains a hydrogen storage alloy having an AB₂ main phase.

The content of the negative electrode active material is not particularly limited, and may be, relative to the mass of the negative electrode active material layer, for example, 20 mass% or more, 30 mass% or more, 40 mass% or more, or 45 mass% or more, and may be 99 mass% or less, 97 mass% or less, 95 mass% or less, 92 mass% or less, 90 mass% or less, 88 mass% or less, 85 mass% or less, 83 mass% or less, 80 mass% or less, 75 mass% or less, 70 mass% or less, 65 mass% or less, 60 mass% or less, 55 mass% or less, or 50 mass% or less.

### (Negative Electrode Active Material: Hydrogen Storage Alloy)

The hydrogen storage alloy has an AB₂ main phase. Of the two atoms having different sizes, the atom with a large atomic radius is referred to as "A", and the atom with a small atomic radius is referred to as "B."

The A site includes Ti, Zr, or a combination thereof.

The B site includes Mn, Cr, Ni, Fe, or a combination thereof.

The hydrogen storage alloy of the present disclosure can be obtained by mixing and melting the metals constituting the hydrogen storage alloy. Melting can be performed, for example, by arc melting.

### (Hydrogen Storage Alloy: First Aspect)

In the first aspect of the hydrogen storage alloy of the present disclosure, the Mn content may be, relative to all metal atoms of the hydrogen storage alloy, 15 at% or less, 14 at% or less, 13 at% or less, 12 at% or less, 11 at% or less, 10 at% or less, 9 at% or less, 8 at% or less, 7 at% or less, 6 at% or less, 5 at% or less, 4 at% or less, 3 at% or less, 2 at% or less, 1 at% or less, or 0 at%.

In the first aspect of the hydrogen storage alloy of the present disclosure, the Cr content may be, relative to all metal atoms of the hydrogen storage alloy, 10 at% or more, 12 at% or more, 15 at% or more, or 18 at% or more, and may be 80 at% or less, 75 at% or less, 70 at% or less, 65 at% or less, 60 at% or less, 55 at% or less, 50 at% or less, 45 at% or less, 40 at% or less, or 38 at% or less.

In the first aspect of the hydrogen storage alloy of the present disclosure, the Ni content may be, relative to all metal atoms of the hydrogen storage alloy, 10 at% or more, 12 at% or more, 15 at% or more, or 18 at% or more, and may be 80 at% or less, 75 at% or less, 70 at% or less, 65 at% or less, 60 at% or less, 55 at% or less, 50 at% or less, 45 at% or less, 40 at% or less, 38 at% or less, 35 at% or less, or 32 at% or less.

In the first aspect of the hydrogen storage alloy of the present disclosure, the Fe content may be, relative to all metal atoms of the hydrogen storage alloy, 50 at% or less, 45 at% or less, 40 at% or less, 35 at% or less, 30 at% or less, 25 at% or less, 20 at% or less, 15 at% or less, 10 at% or less, 5 at% or less, 3 at% or less, 2 at% or less, 1 at% or less, or 0 at% or less.

In the first aspect of the hydrogen storage alloy of the present disclosure, the content of metal atoms belonging to the A site may be, relative to all metal atoms of the hydrogen storage alloy, 20 at% or more, 25 at% or more, 28 at% or more, 30 at% or more, 33 at% or more, 35 at% or more, or 38 at% or more, and may be 60 at% or less, 55 at% or less, 53 at% or less, 50 at% or less, 48 at% or less, or 45 at% or less.

In the first aspect of the hydrogen storage alloy of the present disclosure, the content of metal atoms belonging to the B site may be, relative to all metal atoms of the hydrogen storage alloy, 40 at% or more, 45 at% or more, 47 at% or more, 50 at% or more, 52 at% or more, or 55 at% or more, and may be 80 at% or less, 75 at% or less, 72 at% or less, 70 at% or less, 67 at% or less, 65 at% or less, or 62 at% or less.

In the first aspect of the hydrogen storage alloy of the present disclosure, the atomic ratio of Ni to Cr is preferably 1.5 or less, 1.4 or less, 1.3 or less, or 1.2 or less from the viewpoint of capacity retention. This atomic ratio may be 0.5 or more, 0.6 or more, 0.7 or more, 0.8 or more, or 0.9 or more.

In the first aspect of the hydrogen storage alloy of the present disclosure, the atomic ratio of Mn to Cr is preferably 0.9 or less, 0.8 or less, 0.7 or less, 0.6 or less, 0.5 or less, 0.4 or less, 0.3 or less, 0.2 or less, 0.1 or less, or 0 from the viewpoint of capacity retention. When all or some of the Mn in a conventional hydrogen storage alloy is replaced with Cr, which has a close atomic radius and relatively high corrosion resistance, the elution of the components of the hydrogen storage alloy during charge/discharge cycles can be suppressed.

### (Hydrogen Storage Alloy: Second Aspect)

In the second aspect, the hydrogen storage alloy of the present disclosure contains Al.

In the second aspect of the hydrogen storage alloy of the present disclosure, the Al content may be, relative to all metal atoms of the hydrogen storage alloy, 1 at% or more, 3 at% or more, 5 at% or more, or 7 at% or more, and may be 10 at% or less or 9 at% or less.

In the second aspect of the hydrogen storage alloy of the present disclosure, the Mn content may be, relative to all metal atoms of the hydrogen storage alloy, 20 at% or less, 19 at% or less, 18 at% or less, 17 at% or less, 16 at% or less, 15 at% or less, 14 at% or less, 13 at% or less, 12 at% or less, 11 at% or less, 10 at% or less, 9 at% or less, 8 at% or less, 7 at% or less, 6 at% or less, 5 at% or less, 4 at% or less, 3 at% or less, 2 at% or less, 1 at% or less, or 0 at%.

In the second aspect of the hydrogen storage alloy of the present disclosure, regarding the contents of metal atoms other than Al and Mn, refer to the description regarding the first aspect.

### (Conductive Aid)

As the conductive aid optionally included in the positive electrode active material layer, any known conductive aid which can used in nickel-metal hydride batteries can be employed, and examples thereof include metal powders, metal oxides, and carbon materials. Examples of the metal powder include Ni powders, and specifically ketjen black (KB), vapor grown carbon fiber (VGCF), acetylene black (AB), carbon nanotubes (CNT), carbon nanofibers (CNF), carbon black, coke, and graphite. Alternatively, it may a metal material which can withstand the environment during use of the battery. One type of conductive aid may be used alone, or two or more types may be used in combination. The conductive aid may be in various forms, such as powder and fiber forms.

The amount of the conductive aid contained in the negative electrode active material layer is not particularly limited, and may be, relative to the mass of the negative electrode active material, for example, 1 mass % or more, 3 mass% or more, 5 mass% or more, 7 mass% or more, 10 mass% or more, 15 mass% or more, 20 mass% or more, 25 mass% or more, 30 mass% or more, 35 mass% or more, 40 mass% or more, or 45 mass% or more, and may be 70 mass% or less 65 mass% or less, 60 mass% or less, 55 mass% or less, or 50 mass% or less.

### (Binder)

As the binder optionally included in the negative electrode active material layer, any known binder which can be used in nickel-metal hydride batteries can be employed. For example, styrenebutadiene rubber (SBR)-based binders, carboxymethyl cellulose (CMC)-based binders, acrylonitrile-butadiene rubber (ABR)-based binders, butadiene rubber (BR)-based binders, polyvinylidene fluoride (PVDF)-based binders, and polytetrafluoroethylene (PTFE)-based binders. One binder may be used alone, or two or more binders may be used in combination.

The amount of the binder contained in the negative electrode active material layer is not particularly limited, and may be, relative to the mass of the negative electrode active material, for example, 1 mass% or more or 2 mass% or more, and may be 20 mass% or less, 18 mass% or less, 15 mass% or less, 12 mass% or less, 10 mass% or less, 7 mass% or less, 5 mass% or less, 4 mass% or less, or 3 mass% or less.

### <Positive Electrode Current Collector Layer>

The positive electrode current collector layer may be composed of a known metal that can be used as a positive electrode current collector of a nickel-metal hydride battery. Examples of such a metal include a metal material containing at least one element selected from the group consisting of Cu, Ni, Al, V, Au, Pt, Mg, Fe, Ti, Pb, Co, Cr, Zn, Ge, In, Sn, and Zr. The form of the positive electrode current collector is not particularly limited. Various forms such as foil, mesh, and porous forms can be adopted. The above metal may be vapor-deposited or plated on the surface of a base material.

### <Positive Electrode Active Material Layer>

The positive electrode active material layer contains a positive electrode active material. The positive electrode active material layer may further optionally contain a conductive aid, a binder, etc. The thickness of the positive electrode active material layer is not particularly limited, and may be, for example, 0.1 µm or more or 1 µm or more, and may be 1 mm or less or 100 µm or less.

The types of the conductive aid and binder which can optionally be included in the positive electrode active material layer are not particularly limited, and can be appropriately selected from among, for example, the conductive aids and binders which can optionally be included in the negative electrode active material layer. The amounts of the conductive aid and the binder contained in the positive electrode active material layer are not particularly limited. Refer to the amounts described regarding the negative electrode active material layer.

### (Positive Electrode Active Material)

As the positive electrode active material, an arbitrary nickel compound, and in particular, nickel hydroxide, which can be used in combination with the aqueous electrolyte and the negative electrode of the present disclosure to form a nickel-metal hydride battery can be used, and for example, nickel hydroxide (Ni(OH)₂), or nickel oxyhydroxide (NiO(OH)) can be used.

The content of the positive electrode active material is not particularly limited, and may be, relative to the mass of the positive electrode active material layer, for example, 20 mass% or more, 30 mass% or more, 40 mass% or more, 50 mass% or more, 60 mass% or more, or 70 mass% or more, and may be 99 mass% or less, 97 mass% or less, 95 mass% or less, 92 mass% or less, 90 mass% or less, 88 mass% or less, 85 mass% or less, 83 mass% or less, or 80 mass% or less.

### <Aqueous Electrolyte>

The aqueous electrolyte used in the nickel-metal hydride battery of the present disclosure contains an aqueous solvent and an alkali metal hydroxide dissolved in the aqueous solvent.

The pH of the aqueous electrolyte may be 10.0 or more, 11.0 or more, 11.5 or more, 12.0 or more, 12.5 or more, 13.0 or more, or 13.5 or more.

### (Aqueous Solvent)

The aqueous solvent is a solvent containing water. The aqueous solvent can contain water as a main component. Specifically, water can account for 50 mol% or more, 70 mol% or more, 90 mol% or more, or 95 mol% or more, based on the total amount of the aqueous solvent constituting the electrolytic solution (100 mol%). The upper limit of the proportion of water in the aqueous solvent is not particularly limited, and the aqueous solvent may be 100 mol%, i.e., the entire amount may be water.

The aqueous solvent may consist only of water, but may also contain other components, for example, one or more organic solvents selected from ethers, carbonates, nitriles, alcohols, ketones, amines, amides, sulfur compounds, and hydrocarbons. The solvent other than water may account for 50 mol% or less, 30 mol% or less, 10 mol% or less, or 5 mol% or less, based on the total amount of the aqueous solvent constituting the electrolytic solution (100 mol%).

### (Alkali Metal Hydroxide)

As the alkali metal hydroxide, for example, potassium hydroxide (KOH), sodium hydroxide (NaOH), and lithium hydroxide (LiOH) can be used.

The concentration of the alkali metal hydroxide may be 1 mol/L or more, 2 mol/L or more, 3 mol/L or more, 4 mol/L or more, or 5 mol/L or more, and may be 20 mol/L or less, 18 mol/L or less, 15 mol/L or less, 12 mol/L or less, 10 mol/L or less, 9 mol/L or less, 8 mol/L or less, or 7 mol/L or less.

### <Other Structures>

In addition to the structures described above, the nickel-metal hydride battery may comprise other structures that are obvious as a battery, such as terminals, a battery case, etc.

A nickel-metal hydride battery with the above configuration can be produced by, for example, forming a positive electrode active material layer on the surface of a positive electrode current collector in a dry or wet manner to obtain a positive electrode, forming a negative electrode active material layer on the surface of a negative electrode current collector in a dry or wet manner to obtain a negative electrode, and arranging a separator between the positive electrode and the negative electrode and impregnating with them an aqueous electrolyte.

### EXAMPLES

The present disclosure will be specifically described by means of Examples and Comparative Examples, but the present disclosure is not limited thereto.

Using the reagents of metals in the atomic ratios shown in Table 1, 15 g ingots were prepared by an arc melting method. Alloys were prepared by melting three times to homogenize. In the reagents used, the purity of Zr was 98% and the purity of the other elemental metals was 99.9%.

The obtained alloys were pulverized with a manual stamp mill (DA-30, manufactured by Tokyo Glass Kikai Co., Ltd.) and classified into 38 to 100 µm particles using a 38 µm sieve and a 100 µm sieve.

The obtained alloys were quantitatively analyzed by ICP.

Regarding the first aspect, the amounts of the reagents added are shown in Table 1, and the actual measured values by ICP are shown in Table 2.

Regarding the second aspect, the amounts of the reagents added are shown in Table 3, and the actual measured values by ICP are shown in Table 4.

### [Table 1]

**Table 1**

| | | Amt of metal atoms added (atomic parts) | | | | | | | | | Content in material (at%) | | | | | | Atomic ratio | |
|---|---|---|---|---|---|---|---|---|---|---|---|---|---|---|---|---|---|---|
| | | A site | | | B site | | | | | Total | | | | | | | | |
| | Overview | Ti | Zr | Total | Cr | Mn | Fe | Ni | Total | | Ti | Zr | Cr | Mn | Fe | Ni | Ni/Cr | Mn/Cr |
| Comp Ex 1 | Base comp | 20 | 20 | 40 | 20 | 20 | | 27.5 | 67.5 | 107.5 | 18.60 | 18.60 | 18.60 | 18.60 | 0.00 | 25.58 | 1.38 | 1.00 |
| Ex 1 | Mn 5 parts reduced | 20 | 20 | 40 | 20 | 15 | | 27.5 | 62.5 | 102.5 | 19.51 | 19.51 | 19.51 | 14.63 | 0.00 | 26.83 | 1.38 | 0.75 |
| Ex 2 | Mn 10 parts reduced | 20 | 20 | 40 | 20 | 10 | | 27.5 | 57.5 | 97.5 | 20.51 | 20.51 | 20.51 | 10.26 | 0.00 | 28.21 | 1.38 | 0.50 |
| Ex 3 | Mn 15 parts reduced | 20 | 20 | 40 | 20 | 5 | | 27.5 | 52.5 | 92.5 | 21.62 | 21.62 | 21.62 | 5.41 | 0.00 | 29.73 | 1.38 | 0.25 |
| Ex 4 | Mn 20 parts reduced | 20 | 20 | 40 | 20 | | | 27.5 | 47.5 | 87.5 | 22.86 | 22.86 | 22.86 | 0.00 | 0.00 | 31.43 | 1.38 | 0.00 |
| Ex 5 | Mn 5 parts replaced with Cr | 20 | 20 | 40 | 25 | 15 | | 27.5 | 67.5 | 107.5 | 18.60 | 18.60 | 23.26 | 13.95 | 0.00 | 25.58 | 1.10 | 0.60 |
| Ex 6 | Mn 10 parts replaced with Cr | 20 | 20 | 40 | 30 | 10 | | 27.5 | 67.5 | 107.5 | 18.60 | 18.60 | 27.91 | 9.30 | 0.00 | 25.58 | 0.92 | 0.33 |
| Ex 7 | Mn 15 parts replaced with Cr | 20 1 | 20 1 | 40 | 35 ' | 5 I | I | 27.5 I 1 | 67.5 | 107.5 | 18.60 | 18.60 1 | 32.56 1 1 | 4.65 1 | 0.00 | 25.58 1 | 0.79 | 0.14 |
| Ex 8 | Mn 20 parts replaced with Cr | 20 | 20 | 40 | 40 | | | 27.5 | 67.5 | 107.5 | 18.60 | 18.60 | 37.21 | 0.00 | 0.00 | 25.58 | 0.69 | 0.00 |
| Ex 9 | Mn 5 parts replaced with Fe | 20 | 20 | 40 | 20 | 15 | 5 | 27.5 | 67.5 | 107.5 | 18.60 | 18.60 | 18.60 | 13.95 | 4.65 | 25.58 | 1.38 | 0.75 |
| Ex 10 | Mn 10 parts replaced with Fe | 20 | 20 | 40 | 20 | 10 | 10 | 27.5 | 67.5 | 107.5 | 18.60 | 18.60 | 18.60 | 9.30 | 9.30 | 25.58 | 1.38 | 0.50 |
| Ex 11 | Mn 15 parts replaced with Fe | 20 20 40 | | | 20 | 5 | 15 | 27.5 | 67.5 | 107.5 | 18.60 | 18.60 | 18.60 | 4.65 | 13.95 | 25.58 | 1.38 | 0.25 |
| Ex 12 | Mn 20 parts replaced with Fe | 20 | 20 | 40 | 20 | | 20 | 27.5 | 67.5 | 107.5 | 18.60 | 18.60 | 18.60 | 0.00 | 18.60 | 25.58 | 1.38 | 0.00 |
| Comp Ex 2 | Ni 2.5 parts increased | 20 | 20 | 40 | 20 | 20 | | 30 | 70 | 110.0 | 18.18 | 18.18 | 18.18 | 18.18 | 0.00 | 27.27 | 1.50 | 1.00 |
| Comp Ex 3 | Ni 5.0 parts increased | 20 | 20 | 40 | 20 | 20 | | 32.5 | 72.5 | 112.5 | 17.78 | 17.78 | 17.78 | 17.78 | 0.00 | 28.89 | 1.63 | 1.00 |
| Comp Ex 4 | Ni 7.5 parts increased | 20 I | 20 I | 40 | 20 | 20 | | 35 | 75 | 115.0 | 17.39 | 17.39 | 17.39 | 17.39 | 0.00 | 30.43 | 1.75 | 1.00 |

### [Table 2]

**Table 2**

| | | Measurement value (at%) | | | | | | | | Content in site (at%) | | | | | | Atomic ratio | |
|---|---|---|---|---|---|---|---|---|---|---|---|---|---|---|---|---|---|
| | | A site | | | B site | | | | | A site | | B site | | | | | |
| | Overview | Ti | Zr | Total | Cr | Mn | Fe | Ni | Total | Ti | Zr | Cr | Mn | Fe | Ni | Ni/Cr | Mn/Cr |
| Comp Ex 1 | Base comp | 19.77 | 17.74 | 37.51 | 18.06 | 16.99 | | 27.43 | 62.49 | 52.71 | 47.29 | 28.91 | 27.19 | 0.00 | 43.90 | 1.52 | 0.94 |
| Ex 1 | Mn 5 parts reduced | 20.23 | 18.82 | 39.05 | 19.51 | 13.06 | | 28.38 | 60.95 | 51.82 | 48.18 | 32.01 | 21.42 | 0.00 | 46.57 | 1.45 | 0.67 |
| Ex 2 | Mn 10 parts reduced | 19.14 | 18.03 | 37.17 | 27.48 | 8.80 | | 26.55 | 62.83 | 51.50 | 48.50 | 43.74 | 14.00 | 0.00 | 42.26 | 0.97 | 0.32 |
| Ex 3 | Mn 15 parts reduced | 21.92 | 21.03 | 42.95 | 21.71 | 5.24 | | 30.11 | 57.05 | 51.03 | 48.97 | 38.05 | 9.19 | 0.00 | 52.77 | 1.39 | 0.24 |
| Ex 4 | Mn 20 parts reduced | 22.88 | 22.30 | 45.18 | 23.16 | | | 31.66 | 54.82 | 50.65 | 49.35 | 42.25 | 0.00 | 0.00 | 57.75 | 1.37 | 0.00 |
| Ex 5 | Mn 5 parts replaced with Cr | 18.95 | 18.61 | 37.56 | 23.57 | 12.35 | | 26.52 | 62.44 | 50.45 | 49.55 | 37.75 | 19.78 | 0.00 | 42.47 | 1.13 | 0.52 |
| Ex 6 | Mn 10 parts replaced with Cr | 18.83 | 18.39 | 37.23 | 27.84 | 8.31 | | 26.63 | 62.77 | 50.59 | 49.41 | 44.35 | 13.23 | 0.00 | 42.42 | 0.96 | 0.30 |
| Ex 7 | Mn 15 parts replaced with Cr | 18.56 | 18.37 | 36.92 | 33.30 | 4.13 | | 25.64 | 63.08 | 50.26 | 49.74 | 52.80 | 6.54 | 0.00 | 40.65 | 0.77 | 0.12 |
| Ex 8 | Mn 20 parts replaced with Cr | 18.53 | 18.24 | 36.78 | 37.65 | | | 25.57 | 63.22 | 50.39 | 49.61 | 59.55 | 0.00 | 0.00 | 40.45 | 0.68 | 0.00 |
| Ex 9 | Mn 5 parts replaced with Fe | 18.76 | 19.38 | 38.14 | 18.22 | 13.52 | 4.22 | 25.90 | 61.86 | 49.19 | 50.81 | 29.45 | 21.86 | 6.83 | 41.87 | 1.42 | 0.74 |
| Ex 10 | Mn 10 parts replaced with Fe | 18.54 | 19.20 | 37.74 | 18.15 | 8.66 | 9.22 | 26.23 | 62.26 | 49.14 | 50.86 | 29.15 | 13.91 | 14.81 | 42.12 | 1.44 | 0.48 |
| Ex 11 | Mn 15 parts replaced with Fe | 18.42 | 19.39 | 37.82 | 18.13 | 4.70 | 14.03 | 25.32 | 62.18 | 48.72 | 51.28 | 29.15 | 7.56 | 22.57 | 40.72 | 1.40 | 0.26 |
| Ex 12 | Mn 20 parts replaced with Fe | 17.83 | 19.99 | 37.82 | 18.13 | 0.00 | 19.49 | 24.56 | 62.18 | 47.14 | 52.86 | 29.16 | 0.00 | 31.35 | 39.49 | 1.35 | 0.00 |
| Comp Ex 2 | Ni 2.5 parts increased | 18.49 | 18.01 | 36.51 | 18.55 | 17.87 | | 27.06 | 63.49 | 50.66 | 49.34 | 29.22 | 28.15 | 0.00 | 42.62 | 1.46 | 0.96 |
| Comp Ex 3 | Ni 5.0 parts increased | 17.91 | 17.84 | 35.75 | 17.81 | 17.69 | | 28.75 | 64.25 | 50.10 | 49.90 | 27.72 | 27.54 | 0.00 | 44.74 | 1.61 | 0.99 |
| Comp Ex 4 | Ni 7.5 parts increased | 17.91 | 16.87 | 34.78 | 17.80 | 17.06 | | 30.35 | 65.22 | 51.49 | 48.51 | 27.30 | 26.16 | 0.00 | 46.54 | 1.70 | 0.96 |

### [Table 3]

**Table 3**

| | | Amt of metal atoms added (atomic parts) | | | | | | | | | | Content in material (at%) | | | | | | | Atomic ratio | |
|---|---|---|---|---|---|---|---|---|---|---|---|---|---|---|---|---|---|---|---|---|
| | | A site | | | B site | | | | | Al | Total | | | | | | | | | |
| | Overview | Ti | Zr | Total | Cr | Mn | Fe | Ni | Total | | | Ti | Zr | Cr | Mn | Fe | Al | Ni | Ni/Cr | Mn/Cr |
| Comp Ex 1 | Base comp | 20 | 20 | 40 | 20 | 20 | | 27.5 | 67.5 | | 107.5 | 18.60 | 18.60 | 18.60 | 18.60 | 0.00 | 0.00 | 25.58 | 1.38 | 1.00 |
| Ex 13 | Al 5 parts added | 20 | 20 | 40 | 20 | 20 | | 27.5 | 67.5 | 5 | 107.5 | 18.60 | 18.60 | 18.60 | 18.60 | 0.00 | 4.65 | 25.58 | 1.38 | 1.00 |
| Ex 14 | Al 10 parts added | 20 | 20 | 40 | 20 | 20 | | 27.5 | 67.5 | 10 | 107.5 | 18.60 | 18.60 | 18.60 | 18.60 | 0.00 | 9.30 | 25.58 | 1.38 | 1.00 |

### [Table 4]

**Table 4**

| | | Measurement value (at%) | | | | | | | | | Content in site (at%) | | | | | | | Atomic ratio | |
|---|---|---|---|---|---|---|---|---|---|---|---|---|---|---|---|---|---|---|---|
| | | A site | | | B site | | | | | Al | A site | | B site | | | | Al | | |
| | Overview | Ti | Zr | Total | Cr | Mn | Fe | Ni | Total | | Ti | Zr | Cr | Mn | Fe | Ni | | Ni/Cr | Mn/Cr |
| Comp Ex 1 | Base comp | 19.77 | 17.74 | 37.51 | 18.06 | 16.99 | | 27.43 | 62.49 | | 52.71 | 47.29 | 28.91 | 27.19 | 0.00 | 43.90 | 0.00 | 1.52 | 0.94 |
| Ex 13 | Al 5 parts added | 17.71 | 17.75 | 35.47 | 17.39 | 17.04 | 5.31 | 24.79 | 64.53 | 5.31 | 49.95 | 50.05 | 26.94 | 26.41 | 8.23 | 38.42 | 8.23 | 1.43 | 0.98 |
| Ex 14 | Al 10 parts added | 16.77 | 17.38 | 34.16 | 17.13 | 15.94 | 8.96 | 23.81 | 65.84 | 8.96 | 49.10 | 50.90 | 26.02 | 24.21 | 13.61 | 36.16 | 13.61 | 1.39 | 0.93 |

### <<Preparation of Evaluation Cell>>

Evaluation cells were prepared as follows.

First, a negative electrode was produced. More specifically, a paste-like composition was produced by kneading 49 mass parts of each of the above alloys as a negative electrode active material, 49 mass parts of Ni powder as a conductive aid, and 2 mass parts of carboxymethyl cellulose (CMC) as a binder. A negative electrode was obtained by filling this paste-like composition into a negative electrode current collector, vacuum drying at 80°C, and then performing roll pressing (clearance: 300 µm) under pressure of approximately 8 kN. Note that as the negative electrode current collector, porous Ni (Celmet #7, manufactured by Sumitomo Electric Industries, Ltd., thickness: 1.6 mm) to which Ni tabs were welded was used. The capacity was adjusted so as to achieve approximately 240 mAh.

Next, a positive electrode was produced. More specifically, a paste-like composition was produced by kneading 88 mass parts of nickel hydroxide (Ni(OH)₂) as a positive electrode active material, 10 mass parts of cobalt oxide (CoO) as a conductive aid, and 1 mass part of each of two types of binders (carboxymethyl cellulose (CMC) and polyvinyl alcohol (PVA). This paste-like composition was filled into the porous nickel described above, followed by vacuum drying at 80°C, and then roll-pressing at approximately 8 kN to obtain a positive electrode. Note that the capacity ratio of the negative electrode and positive electrode was adjusted to negative electrode: positive electrode = 1:4.5.

Next, an electrolytic solution was prepared. Pure water was added to KOH and the concentration of KOH was adjusted to 6 mol/L to obtain 90 ml of an electrolytic solution. Thereafter, the electrolytic solution and a separator (PE/PP nonwoven fabric, thickness: 150 µm) were placed in a container, and a negative electrode (working electrode), positive electrode (counter electrode), and an Hg/HgO electrode (reference electrode) were placed in the container to obtain an evaluation cell.

### <<Charge/Discharge Test (25°C)>>

Using the obtained evaluation cells, charging and discharging were performed until the negative electrode capacity was saturated. More specifically, the following charging and discharging (1) to (4) were performed.
(1) Charged at 0.1 C for 14 hours, then discharged at 0.1 C until the negative electrode potential reached -0.6 V.
(2) Charged at 0.5 C for 2.2 hours, then discharged at 0.5 C until the negative electrode potential reached -0.6 V.
(3) Next, the battery was charged at 0.1 C for 14 hours, and then discharged at 0.1 C until the negative electrode potential reached -0.6 V.
(4) The charging and discharging of (1) to (3) above were repeated until the 0.1 C discharge capacity was saturated, and the obtained electrode capacity was taken as the initial capacity.

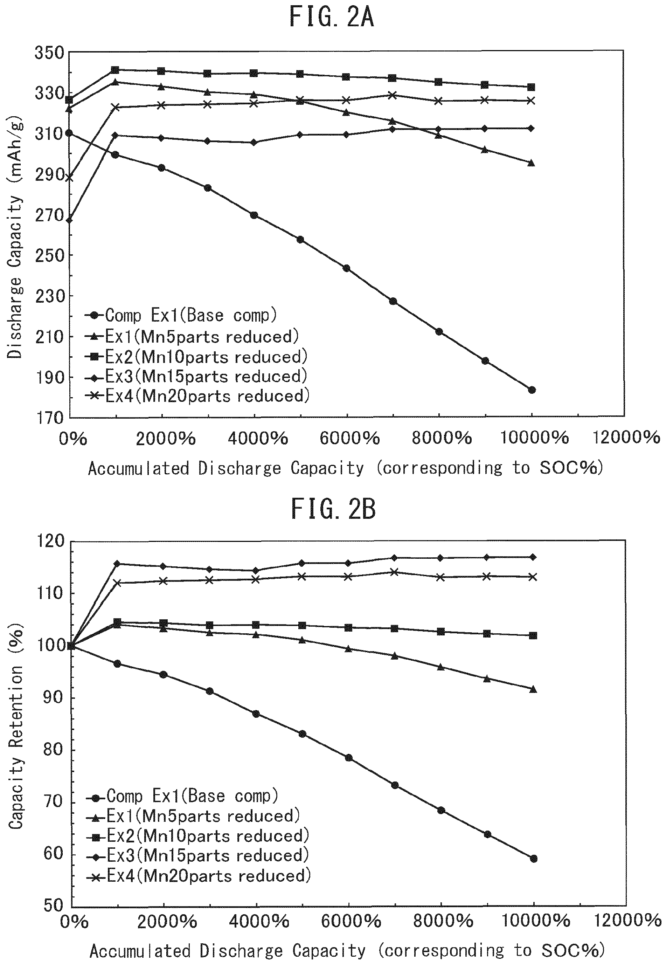

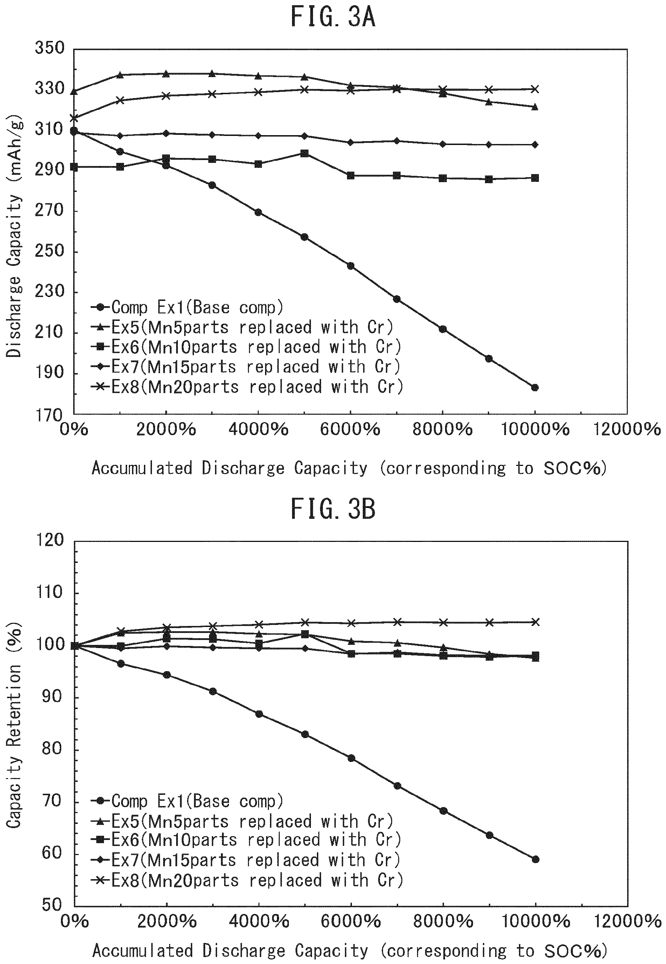

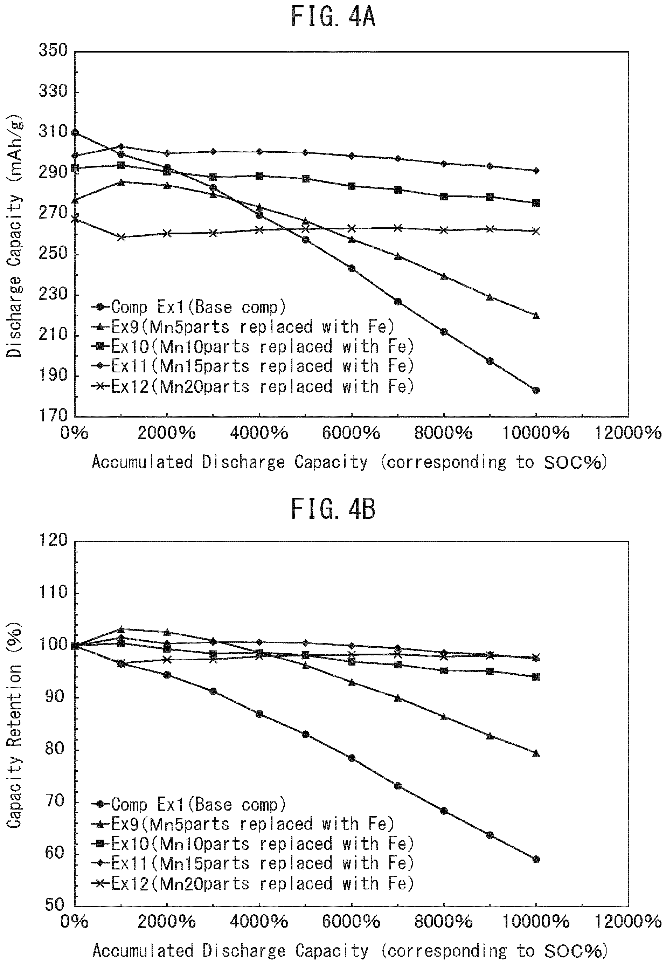

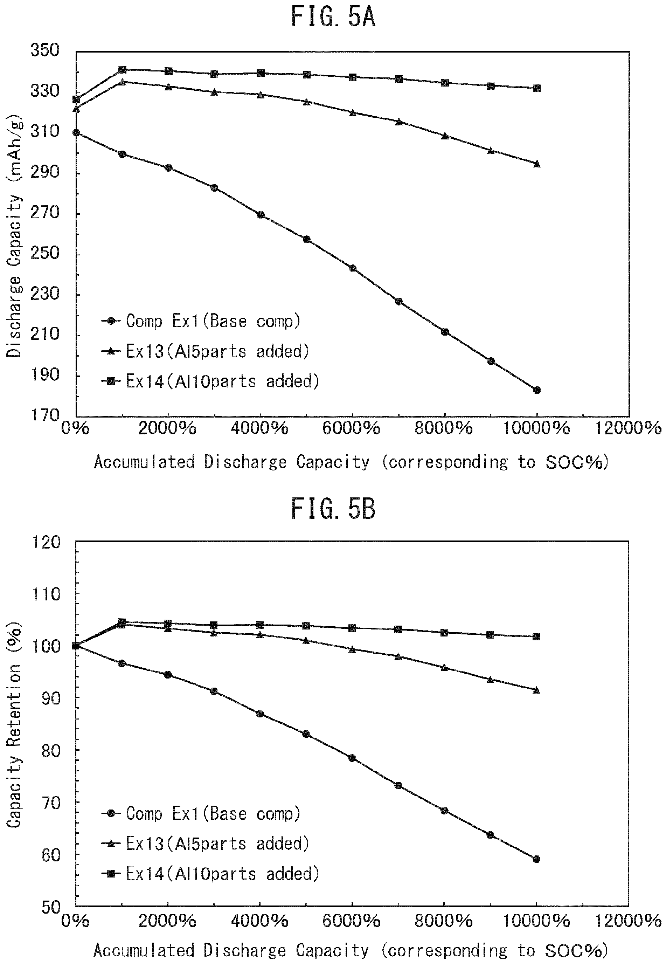

The intersection with the vertical axis of each of the graphs shown in FIGS. 2A, 2B, 3A, 3B, 4A, 4B, 5A, 5B, 6A, and 6B corresponds to this initial capacity.

The evaluation cell that had undergone break-in charging and discharging was charged at 0.1 C for 5 hours. Next, while observing the amount of electricity, charging at 0.5 C and discharging at 0.5 C were repeated 20 times between the potential corresponding to 25% SOC and the potential corresponding to 75% SOC to perform charging and discharging corresponding to 1000% SOC.

After this cycle, the battery was charged at 0.1 C for 14 hours, and then discharged at 0.1 C until the negative electrode potential reached -0.6 V to confirm the capacity.

By repeating the above charge/discharge cycle and capacity confirmation for each 1000% SOC, the change in capacity for each 1000% SOC was recorded. This operation was repeated until charging and discharging corresponding to an SOC of 10,000% was performed.

Evaluation results of the Examples and Comparative Examples are shown in FIGS. 2A, 2B, 3A, 3B, 4A, 4B, 5A, 5B, 6A, and 6B.

From FIGS. 2A, 2B, 3A, 3B, 4A, 4B, 5A, and 5B, and Tables 1 to 2, it can be understood that by reducing the amount of Mn or replacing all or part of Mn with Cr or Fe, Examples 1 to 12, in which the Mn content was 15 at% or less, had suitable capacity retention as compared to Comparative Example 1 (base composition).

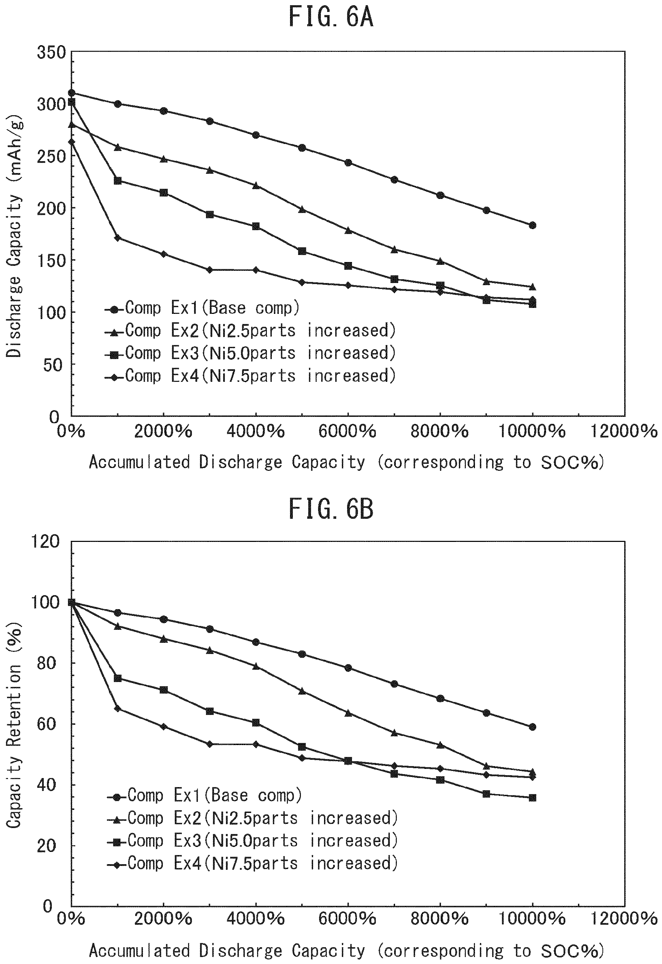

Furthermore, from FIGS. 6A and 6B, and Tables 3 and 4, it can be understood that Examples 13 and 14, in which Al was added, had suitable capacity retention.

### DESCRIPTION OF REFERENCE SIGNS

- 10: positive electrode
- 11: positive electrode active material layer
- 12: positive electrode current collector
- 20: separator
- 30: negative electrode
- 31: negative electrode active material layer
- 32: negative electrode current collector
- 100: nickel-metal hydride battery

## Claims

1. A nickel-metal hydride battery, comprising:
a positive electrode active material layer, a negative electrode active material layer, and an aqueous electrolyte, wherein
a negative electrode active material contained in the negative electrode active material layer is a hydrogen storage alloy having an AB₂ main phase,
the A site includes Ti, Zr, or a combination thereof,
the B site includes Mn, Cr, Ni, Fe, or a combination thereof, and
among all metal atoms in the hydrogen storage alloy, a proportion of Mn is 15 at% or less, a proportion of Cr is 10 at% to 80 at%, and a proportion of Ni is 10 at% to 80 at%, and a proportion of Fe is 50 at% or less.

2. The nickel-metal hydride battery according to Claim 1, wherein an atomic ratio of Mn relative to Cr at the B site of the negative electrode active material is 0.8 or less.

3. A nickel-metal hydride battery, comprising:
a positive electrode active material layer, a negative electrode active material layer, and an aqueous electrolyte, wherein
a negative electrode active material contained in the negative electrode active material layer is a hydrogen storage alloy having an AB₂ main phase,
the A site includes Ti, Zr, or a combination thereof,
the B site includes Mn, Cr, Ni, Fe, or a combination thereof, and
the hydrogen storage alloy contains Al.

4. The nickel-metal hydride battery according to Claim 3, wherein the hydrogen storage alloy contains Al in a proportion of 10 at% or less relative to all metal atoms of the hydrogen storage alloy.
